# EUROPÄISCHE PATENTSCHRIFT

(11) **EP 1 425 155 B1**
(45) Veröffentlichungstag und Bekanntmachung des Hinweises auf die Patenterteilung: **02.02.2005**
(21) Anmeldenummer: 02798711.4
(22) Anmeldetag: 09.09.2002
(51) Int. Cl.: B29C 53/54, B29C 53/52, B29C 65/78

(54) **VERFAHREN ZUR STEUERUNG DER LAGE DER RÄNDER EINES FOLIENBANDES**
METHOD FOR CONTROLLING THE POSITION OF A FOIL STRIP EDGES
PROCEDE DE COMMANDE DE LA POSITION DES BORDS D'UNE BANDE DE FILM

(30) Priorität: 12.09.2001 DE 10144898
(43) Veröffentlichungstag der Anmeldung: 09.06.2004
(73) Patentinhaber: Aisapack Holding S.A., 1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: PCT/EP2002/010089
(87) Internationale Veröffentlichungsnummer: WO 2003/024694

(56) Entgegenhaltungen:
- EP-A- 0 899 085
- EP-A- 1 116 659
- DE-A- 3 739 400
- GB-A- 1 496 377
- GB-A- 1 567 696
- US-A- 3 824 366
- PATENT ABSTRACTS OF JAPAN vol. 018, no. 003 (E-1485), 6. Januar 1994 (1994-01-06) -& JP 05 250944 A (SHOWA ELECTRIC WIRE & CABLE CO LTD), 28. September 1993 (1993-09-28)

## Beschreibung

Die Erfindung betrifft ein Verfahren zur Steuerung der Ränder eines Folienbandes, das in einen Formtrichter einer Vorrichtung zur Herstellung von Rohrkörpem aus dem Folienband mit einer Überlappungsnaht mittels eines Führungskeils zugeführt und dann verschweißt wird.

Dabei wird das zunächst flach liegende Folienband im Formtrichter zu einem Endlosrohr umgeformt, wobei die jeweiligen Folienränder zur Bildung einer Überlappungsnaht durch einen Führungskeil übereinander in die rohrförmige Position geführt werden. Die sich überlappenden Seitenkanten werden durch Einwirkung von Wärme und gegebenenfalls auch von Druck zu einem festen Rohr verschweißt, nachfolgend abgelängt und einer Weiterverarbeitung zugeführt. Als Folienbänder werden Laminate eingesetzt, die zwischen zwei äußeren Kunststoffschichten, gegebenenfalls auch mit weiteren dazwischen liegenden und erforderlichenfalls mittels Haftschichten verbundener weiterer Kunststoffschichten, eine zentrale diffusionshemmende Sperrschicht aufweisen, die z. B. in Form einer Aluminiumfolie ausgeführt sein kann. Derartige Aluminiumfolien weisen Schichtstärken zwischen 0,01 bis 0,04 mm gegebenenfalls auch darüber auf. Zum Schweißen wird induktive Wärme in der Aluminiumschicht erzeugt, z.B. durch Hochfrequenz mittels eines HF-Induktors. Dabei beträgt die übliche Überlappung der Seitenkanten des Laminats ca. 2 bis 4 mm, in Ausnahmefällen auch darunter oder darüber.

Eine derartige Vorrichtung ist aus der DE-C2-37 39 400 bekannt. Statt oder zusätzlich zum Formtrichter kann die rohrförmige Form auch durch äußere und gegebenenfalls innere Antriebsbänder erfolgen, wobei auch eine Induktionsspule eingesetzt werden kann.

Zur Konzentration der Feldlinien kann im Spulenkörper auch ein Ferritkern vorgesehen sein, so dass die Induktionswärme räumlich begrenzt und intensiv übertragen werden kann. Üblicherweise werden mittels der zentralen Aluminiumfolie die sie umgebenden Kunststoffschichten über ihren Schmelzpunkt hinaus erhitzt, miteinander verbunden, gegebenenfalls unter Druck, eventuell zu einer Naht verdichtet und gegebenenfalls auch geformt, und anschließend gekühlt, beispielsweise durch äußere und gegebenenfalls auch innere Kühlrollen, mittels deren auch das Verpressen zu einer dauerhaften und geformten Schweißnaht möglich ist.

Üblicherweise werden Laminatfolienbänder, beispielsweise zur Herstellung von Laminattuben, in einer Breite von ca. 1,2 m auf sogenannten Laminatoren hergestellt und anschließend von einer Wickelmaschine zu Mutterrollen aufgewickelt. Aus diesen Mutterrollen werden durch eine Streifenschneidmaschine in Abhängigkeit von den gewünschten Durchmessern der Rohrkörper der Laminattuben mehrere Einzelrollen mit einer dem gewünschten Durchmesser der Tuben entsprechenden Breite hergestellt. Dadurch entstehen über die Breite der Mutterrolle mehrere parallele Einzelrollen mit jeweils unterschiedlichen Eigenschaften. Insbesondere bezüglich der Spannungsverteilung treten in jeder Einzelrolle - z. T. erhebliche-Unterschiede auf, die bei der Rohrbildung und/oder in der Schweißeinheit zu unstabilen Zuständen führen. Es kann ein seitliches Pendeln oder auch ein sogenanntes Verlaufen oder Auslenken des Überlappungsbereichs der Folienbänder beobachtet werden. Dies alles - insbesondere das seitliche Verlaufen - führt zu starken Veränderungen bei der Energieübertragung in die Überlappungsbereiche, wodurch eine stabile Überlappungsnaht äußerst schwer einzuhalten ist, wodurch ein aktives Überwachen seitens des Betriebspersonals und ein öfteres Nachjustieren des Formtrichters mit dem Zentrierkeil erforderlich ist, sofern Ausschussproduktionen verhindert werden sollen.

Durch die meist oftmals sehr geringe Folienstärke der Folienbänder sind deren Ränder allein so instabil, dass mechanische Abtastmittel nicht verwendet werden können. Problematisch haben sich auch Fluidabtastungen erwiesen, bei denen ein sehr feiner Luftstrahl auf die Überlappungskante geleitet wird, so dass sich Veränderungen des Abstandes Luftdüse zum Objekt durch Druckänderungen in der Düse dokumentieren, die zur Steuerung des Einlaufs der Folie ausgenutzt werden können.

Aufgrund des üblicherweise verhältnismäßig kräftigen hochfrequenten Wechselfeldes beim Verschweißen können elektrische Sensoren für induktive oder kapazitative Messverfahren nicht eingesetzt werden. Wegen der großen Vielfalt der Färbungen der zu verarbeiteten Folien und/oder gegebenenfalls auch von unterschiedlichen Druckbildern ist auch der Einsatz von optischen Abtastmitteln - wie z. B. CCD Kameras - oftmals problematisch.

Aufgabe der Erfindung ist es, ein Verfahren zur Steuerung der Lage der Ränder einer Folienbandes mit den Merkmalen des Oberbegriffs des Anspruchs 1 anzugeben, das eine automatische Steuerung durch abtastfreie Überwachung der Lage der Überlappungsnaht zulässt, so dass eine personelle Überwachung und Handaussteuerung zur Vermeidung von Ausschuss vermieden werden kann.

Diese Aufgabe wird durch die Merkmale des kennzeichnenden Teils des Anspruchs 1 erreicht.

Vorzugsweise Ausführungen sind den Unteransprüchen zu entnehmen.

Nachstehend wird die Erfindung anhand eines Ausführungsbeispiels unter Bezug auf Zeichnungen näher erläutert. Es zeigt:
- Fig. 1: eine Vorrichtung zur Herstellung von Rohrkörperabschnitten aus einem Folienband; schematisch
- Fig. 2: einen vergrößerten Ausschnitt der Vorrichtung mit einem Folientrichter, einer Verschweißeinrichtung und einem Liniensensor;

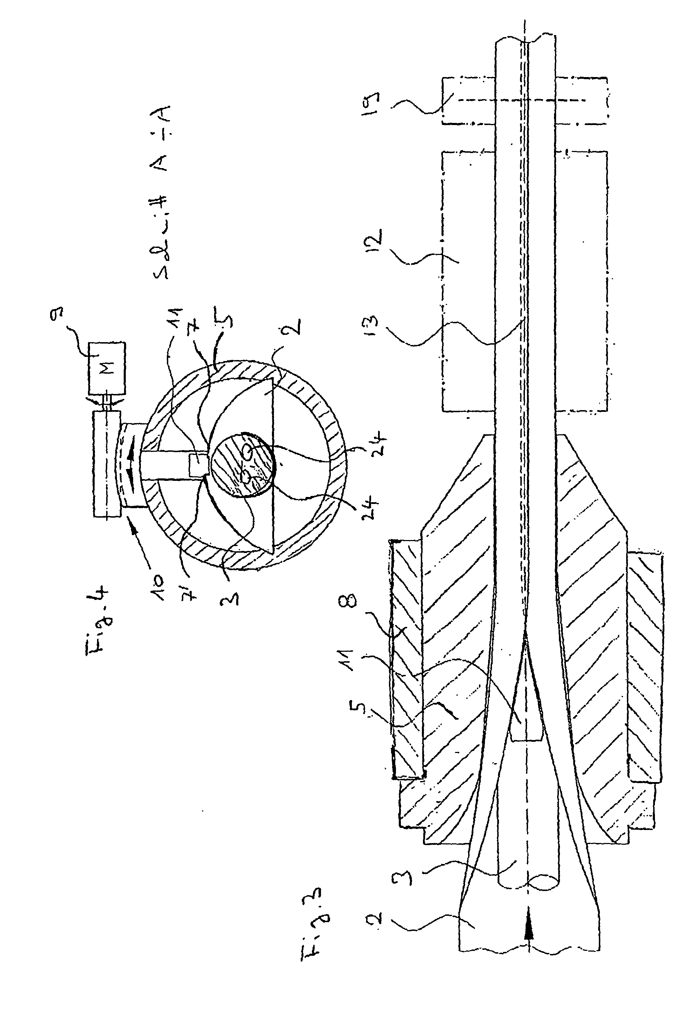

- Fig. 3: das gleiche wie Fig. 2 in Sicht von oben (d. h. gegenüber Fig. 2 um 90° gedreht);
- Fig. 4: eine Draufsicht in axialer Richtung auf den Einlauf des Formtrichters mit teilweisem Schnitt gemäß Linie A-A in Fig. 1;
- Fig. 5: einen teilweisen Schnitt durch die Verschweißeinrichtung gemäß Linie B-B von Fig. 1; und

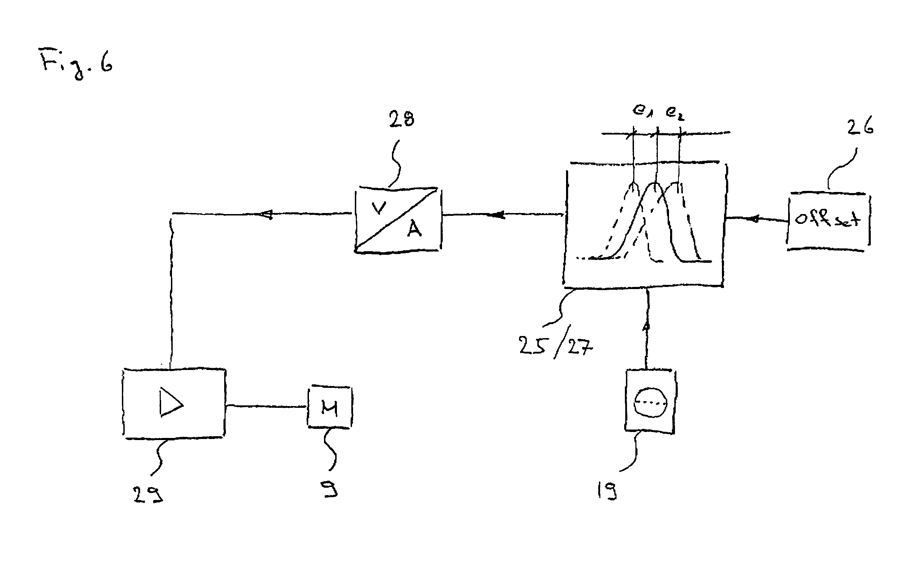

- Fig. 6: ein Schaltschema der Verknüpfung eines durch den IR Liniensensor abgetasteten Bildes einer konkreten Überlappungsnahttemperatur mit einer Auswerteinheit und einer Steuereinheit zum Drehen des Formtrichters.

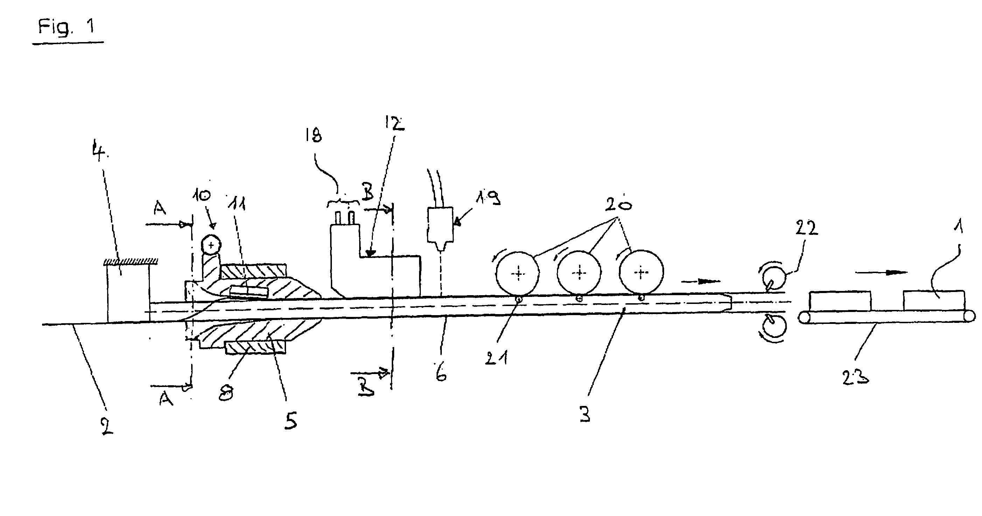

Die in Fig. 1 dargestellte Vorrichtung zur Herstellung von Rohrkörperabschnitten 1 weist eine Einzelrolle (nicht dargestellt) mit einer bandförmigen Folie auf, z. B. einer Laminatfolie 2, die mindestens eine durch zwei äußere Kunststoffschichten eingeschlossene Sperrschicht, z. B. aus Aluminium enthält. Die flach zugeführte Laminatfolie 2 wird um einen Schweißdorn 3, der noch im Bereich der flachen Laminatfolie 2 angeordnet und in einer Aufhängung 4 befestigt ist, mittels eines Formtrichters 5 zu einem Endlosrohr 6 mit sich überlappenden Kanten 7, 7' geformt.

Der Formtrichter 5 ist in einer als Buchse 8 ausgestalteten Halterung drehbar angeordnet. Ein Motor 9 steht über ein Schneckengetriebe 10 aus Schneckenrad10' und Schnecke 10" mit dem Formtrichter 5 zu dessen Drehung um seine Zentralachse in Verbindung. Innerhalb des Formtrichters 5 ist fest ein Führungskeil 11 angeordnet, durch den die beiden Kanten 7, 7' der zugeführten Laminatfolie 2 in eine einander überlappende Position geführt werden. Der Überlappungsbereich der Kanten 7, 7' des Folienbandes 2 beträgt ca. 2 bis 5 mm. Im Einzelfall kann die Überlappung auch größer oder kleiner sein, sie muß jedoch entsprechend dem gewünschten Durchmesser des gebildeten Endlosrohres 6 groß genug sein, um in der nachfolgenden Schweißeinrichtung 12 eine ausreichend feste Überlappungsnaht 13 herstellen zu können.

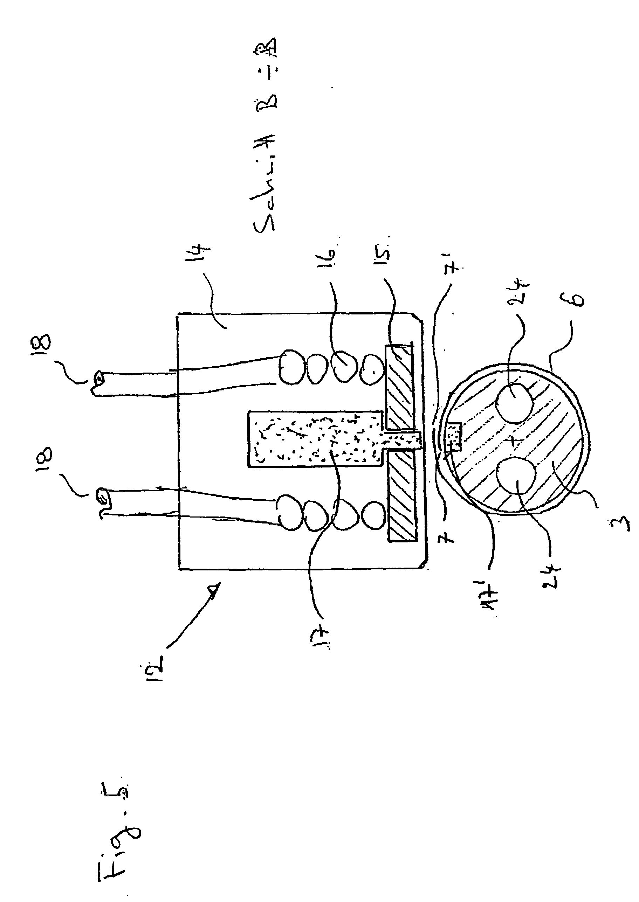

Die insbesondere in Fig. 5 schematisch dargestellte Verschweißeinrichtung 12 besteht im Ausführungsbeispiel aus einem Hochfrequenz (HF) Schweißgerät mit einem Gehäuse 14, in dem an der Seite des Schweißdorns 3 ein Spulenkörper 15 gegebenenfalls mit weiteren Spulenwindungen 16 angeordnet ist. Im Spulenkörper 15 gegebenenfalls auch innerhalb der weiteren Spulenwindungen 16 ist ein Ferritkern 17 angeordnet.

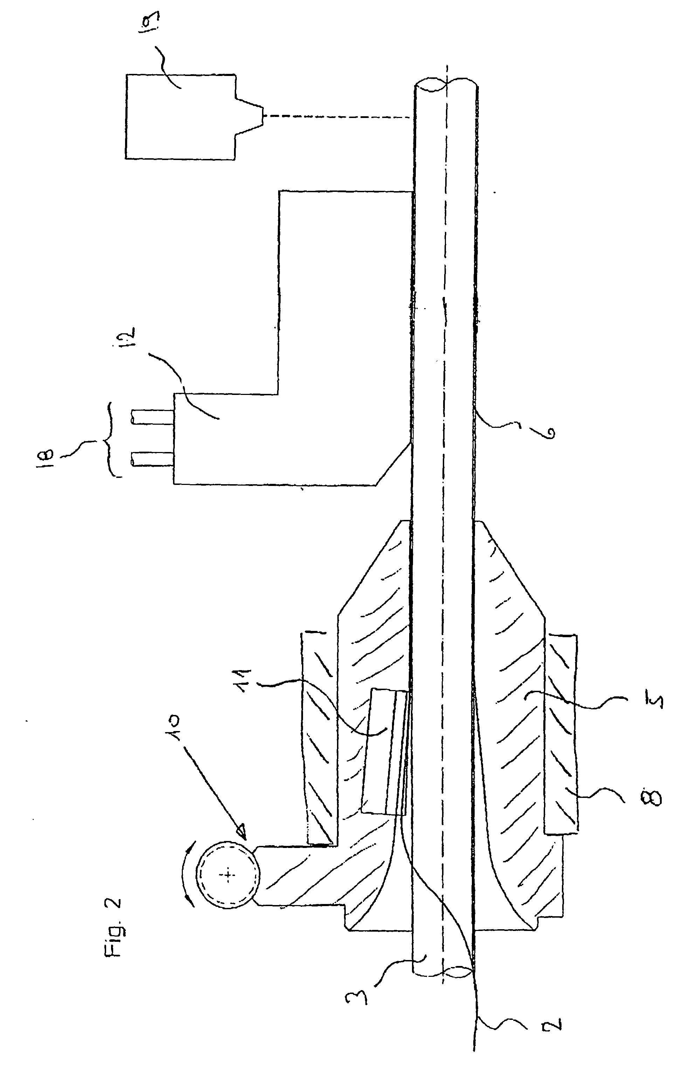

In Fig. 1, 2 und 5 sind elektrische Leitungen 18 angedeutet, über die Betriebsstrom der Verschweißeinrichtung 12 zugeführt wird.

Im Schweißdorn 3 ist in der oberen Rundung gegenüber dem Ferritkern 17 der Schweißspule ein weiterer Ferritkern 17' eingelegt. Durch die sich gegenüberliegenden Ferritkerne 17, 17' ist es möglich, nur einen eng begrenzten im wesentlichen nur die eigentliche Überlappungsnaht 13 überdeckenden Bereich der jeweiligen Kunststoffschichten der Laminatfolie 2 durch die Aluminiumschichten in den sich überlappenden Kanten 7, 7' aufzuschmelzen.

Unmittelbar nach der Verschweißeinrichtung 12 ist ein elektrischer Infrarotliniensensor 19 angeordnet, der ein Bild des Temperaturverlaufs innerhalb des aufgeschmolzenen Bereichs der Überlappungsnaht 13 quer zur Längserstreckung des Endlosrohres 6 aufnimmt. Auf den IR Liniensensor 19 folgt eine Rolle 20, der im Schweißdorn 3 jeweils eine Gegenrolle 21 zugeordnet sein kann, die als Kühl- und/oder Press- oder Formrollen dienen. Es können auch weitere Rollen 20 und Gegenrollen 21 vorgesehen sein, durch die eine Formgebung der Überlappungsnaht 13 und gegebenenfalls gleichzeitig auch eine zusätzliche Kühlung erfolgen können. Die Zahl der Rollen 20 und gegebenenfalls auch der Gegenrollen 21 kann beliebig variiert werden und den jeweiligen Formgebungs- und Kühlbedingungen angepasst sein.

Das dann mit einer festen Überlappungsnaht 13 vom Schweißdorn 3 ablaufende Endlosrohr 6 wird einer Schneideinrichtung 22 oder einer Ablängvorrichtung zugeführt. Im Ausführungsbeispiel ist ein bekannter Querschneider vorgesehen, durch den die gewünschte Länge der dadurch hergestellten Rohrkörperabschnitte 1 abgetrennt werden, die dann mittels eines Transportbandes 23 einer Weiterverarbeitung (nicht dargestellt) zugeführt werden können, z. B. zur Anbringung einer Tubenschulter mit Verschlusskappe.

Im Schweißdorn 3 können auch Bohrungen 24 zur Zufuhr eines Kühlmittels, beispielsweise Wasser, ausgeführt sein.

Das durch den Infrarot-Liniensensor 19 ermittelte Temperaturprofil der praktisch noch aufgeschmolzenen Überlappungsnaht 13 wird einer Auswerteinheit 25 zugeführt. Mittels des Sollwert-Eingabegerätes 26 wird ein vom gewünschten Produkt abhängiges Temperatursollprofil eingegeben. Mittels eines IR-Analysegeräts 27 wird in bestimmten Zeitintervallen z. B. von zwei Sekunden das vom IR-Liniensensor 19 gelieferte Istprofil mit dem vorgegebenen Sollprofil verglichen und es werden die jeweiligen Abweichungen z. B. e₁ bzw. e₂ festgestellt. Ein Signalkonverter 28 wandelt die dem jeweiligen Abweichungswert z. B. e₁ oder e₂ entsprechenden Signale in ein für den Motor 9 geeignetes Signal um, wobei auch ein Verstärker 29 das Signal verstärken kann. Aufgrund des Signals dreht der Motor 9 über das Schneckengetriebe 10 den Formtrichter 5 und damit auch den damit verbundenen Führungskeil 11 solange in eine Richtung bis die Abweichung e₁ bzw. e₂ kompensiert bzw. ausgeglichen ist und das Sollprofil mit dem durch den IR-Liniensensor 19 gemessenen Istprofil deckungsgleich ist.

Durch dieses Manöver wird der Einlauf des Bandes der Laminatfolie 2 und damit die Überlappung der Folienkanten 7, 7' der jeweiligen Laminatfolie 2 so verändert, dass eventuelle Abweichungen über den Querschnitt bzw. über die Länge jeder Einzelrolle einer Laminatfolie 2 innerhalb allerkürzester Zeit - praktisch sofort - automatisch ausgeglichen werden. Fehlerhafte Überlappungsnähte 13 und damit Ausschuß werden somit schnellstmöglich mit Sicherheit vermieden.

## Patentansprüche

1. Verfahren zur Steuerung der Lage der Ränder (7, 7') eines Folienbandes, das in einen Formtrichter (5) einer Vorrichtung zur Herstellung von Rohrkörpern aus dem Folienband mit einer Überlappungsnaht (13) mittels eines Führungskeils (11) zugeführt und dann verschweißt wird,
**dadurch gekennzeichnet, dass** nach dem Schweißen mittels eines Infrarot Zeilen-/Liniensensors (19) ein Temperaturprofil quer zur Überlappungsnaht (13) gemessen, ausgewertet und bei Abweichungen vom vorgegebenen Istprofil ein Signal zur Drehung des Formtrichters (5) mit dem Führungskeil (11) ausgegeben wird.

2. Verfahren nach Anspruch 1,
**dadurch gekennzeichnet, dass** das Schweißen durch Hochfrequenz (HF) erfolgt.

3. Verfahren nach Anspruch 1 oder 2,
**dadurch gekennzeichnet, dass** das Temperaturprofil unmittelbar nach dem Schweißen gemessen wird.

## Claims

1. Method for controlling the position of the edges (7, 7') of a foil strip that is, by means of a guide wedge (11), supplied to a shaping funnel (5) of a device producing tubular bodies from the foil strip with an overlapping weld seam (13) and is then welded,
**characterized in that**, after welding, a temperature profile perpendicular to the overlapping weld seam (13) is measured and evaluated with the help of an infrared linear sensor (19) and that, if there are any deviations from the specified actual profile, a signal for rotating the shaping funnel (5) by means of the guide wedge (11) is emitted.

2. Method according to Claim 1,
**characterized in that** high-frequency (HF) welding is used as welding process.

3. Method according to Claim 1 or 2,
**characterized in that** the temperature profile is measured immediately after welding.

## Revendications

1. Procédé de commande de la position des bords (7, 7') d'une bande de film, amenée dans un entonnoir de formage (5) d'un dispositif servant à produire des corps tubulaires à partir de la bande de film, avec une couture à chevauchement (13), par l'intermédiaire d'une clavette de guidage (11), avant son soudage,
**caractérisé en ce qu'**après le soudage, un capteur de rangées/de lignes à infrarouge permet la mesure et l'exploitation d'un profil des températures transversal à la couture à chevauchement (13), un signal destiné à entraîner une rotation de l'entonnoir de formage (5) par la clavette de guidage (11) étant transmis en présence d'écarts par rapport au profil de consigne prédéterminé.

2. Procédé selon la revendication 1, **caractérisé en ce que** le soudage se fait par haute fréquence (HF).

3. Procédé selon les revendications 1 ou 2, **caractérisé en ce que** le profil des températures est mesuré immédiatement après le soudage.
